# FASCICULE DE BREVET EUROPEEN

(11) **EP 2 706 454 B1**
(45) Date de publication et mention de la délivrance du brevet: **02.12.2020**
(21) Numéro de dépôt: 13181504.5
(22) Date de dépôt: 23.08.2013
(51) Int. Cl.: G06F 3/147, G01C 23/00, G06F 3/01, G06K 9/00

(54) **Système et procédé de commande de la position d'un objet déplaçable sur un dispositif de visualisation**
System und Verfahren zum Steuern der Position eines beweglichen Objekts auf einer Anzeigevorrichtung
System and method for controlling the position of a movable object on a display device

(30) Priorité: 05.09.2012 FR 1202373
(43) Date de publication de la demande: 12.03.2014
(73) Titulaire: Dassault Aviation, 75008 Paris (FR)
(72) Inventeur: Saint Requier, Cyril, 78180 MONTIGNY LE BRETONNEUX (FR); Kervella, Audren, 78150 LE CHESNAY (FR)
(74) Mandataire: Lavoix

(56) Documents cités:
- WO-A1-03/017203
- US-A- 4 109 145
- US-A- 4 973 149
- US-A1- 2011 310 001

## Description

La présente invention concerne un système de commande selon le préambule de la revendication 1.

Elle s'applique en particulier au positionnement d'un curseur sur des écrans de visualisation disposés dans le cockpit d'un aéronef.

Au sein d'un cockpit, de tels écrans de visualisation permettent aux pilotes d'interagir avec les systèmes avion. Cette interaction est classiquement réalisée par l'intermédiaire de curseurs dont le pilotage se fait à l'aide d'un dispositif de commande dédié de type souris.

Chaque pilote a ainsi accès à un dispositif de commande de curseur, généralement appelé « CCD » pour « Cursor Control Device », comprenant une boule de commande ou « trackball » actionnable par le pilote pour déplacer le curseur, ainsi que des boutons permettant au pilote, une fois le curseur positionné dans la zone souhaitée, de modifier ou insérer des valeurs, ou de faire des sélections.

La mise en rotation de la boule de commande permet de déplacer le curseur sur chacun des écrans. Elle permet également de déplacer le curseur d'un écran à l'autre, mais ce mode de déplacement du curseur d'un écran à un autre est généralement lent. Le dispositif de commande de curseur est ainsi muni d'une manette d'affectation spécifique permettant de positionner directement le curseur dans un écran choisi. Lorsque cette manette d'affectation est activée, le curseur est positionné à une position par défaut dans l'écran choisi.

Afin de ne pas créer de gêne pour la visualisation des informations dans les écrans, le curseur n'est pas affiché s'il est inactif. Par exemple, si aucune action n'a été réalisée sur le dispositif de commande pendant une durée prédéterminée telle que 30 secondes, le curseur disparaît des écrans.

Deux types d'actions permettent de faire réapparaître le curseur : lorsque le pilote bouge à nouveau la boule de commande, le curseur réapparaît à sa dernière position ; par ailleurs, lorsque le pilote affecte le curseur à l'un des écrans au moyen de la manette d'affectation, le curseur apparaît à la position par défaut dans l'écran choisi. Lorsque le curseur réapparaît, il est temporairement entouré d'un halo afin de permettre au pilote de le localiser plus rapidement dans les écrans.

Cependant, bien que le curseur soit ainsi spécifiquement identifié lorsqu'il est réactivé, il n'est pas toujours facile pour le pilote de le trouver immédiatement. En outre, la position par défaut à laquelle est positionné le curseur dans un écran peut être éloignée de la zone d'intérêt dans laquelle souhaite travailler le pilote.

De plus, le déplacement du curseur par utilisation de la boule de commande est limité en vitesse. Ainsi, le temps passé par le pilote à trouver le curseur ou à le déplacer dans l'écran est du temps perdu pendant lequel le pilote n'est pas disponible pour réaliser les tâches dont il a la charge. L'utilisation du curseur étant le moyen privilégié pour interagir avec les systèmes, ce temps peut être significatif, en particulier sur une longue durée d'un vol.

Par ailleurs, ce mode de contrôle de la position du curseur ne fonctionne pas si l'aéronef est équipé d'un nombre réduit d'écrans de grande taille, voire d'un unique écran. En effet, la commande d'affectation du curseur dans un écran spécifique n'a alors plus de sens, et le chemin à parcourir par le curseur entre deux points distants d'un unique écran rend l'ensemble du concept d'interaction peu viable en utilisation opérationnelle.

On connaît par ailleurs des documents US 2011/0310001 A1, WO 03/017203 A1, US 4,109,145 A et US 4,973,149 A des systèmes de suivi du regard d'un opérateur.

Le but de l'invention est donc de proposer un système de commande ne présentant pas ces inconvénients, et permettant un positionnement rapide et efficace d'un objet sur un dispositif de visualisation dans un poste de pilotage d'un aéronef.

A cette fin, l'invention a pour objet un système selon la revendication 1.

Selon d'autres aspects de l'invention, le système comprend l'une ou plusieurs des caractéristiques des revendications 2 à 13.

L'invention a également pour objet un procédé de commande selon la revendication 14.

Selon un autre aspect de l'invention, le procédé comprend l'une ou plusieurs des caractéristiques des revendications 15 et 16.

L'invention sera mieux comprise à la lecture de la description qui va suivre, donnée uniquement à titre d'exemple, et faite en se référant aux dessins annexés, sur lesquels :
- la Figure 1 est un schéma d'un système de commande selon un mode de réalisation l'invention ;
- la Figure 2 est une vue schématique d'un détail du système de commande de la Figure 1 ;
- le Figure 3 est une vue schématique d'un cockpit d'un aéronef comprenant le système de commande de la Figure 1 ;
- la Figure 4 est une vue schématique détaillée du dispositif de commande manuelle du système de la Figure 1 ;
- la Figure 5 est un schéma synoptique d'un procédé de commande selon l'invention.

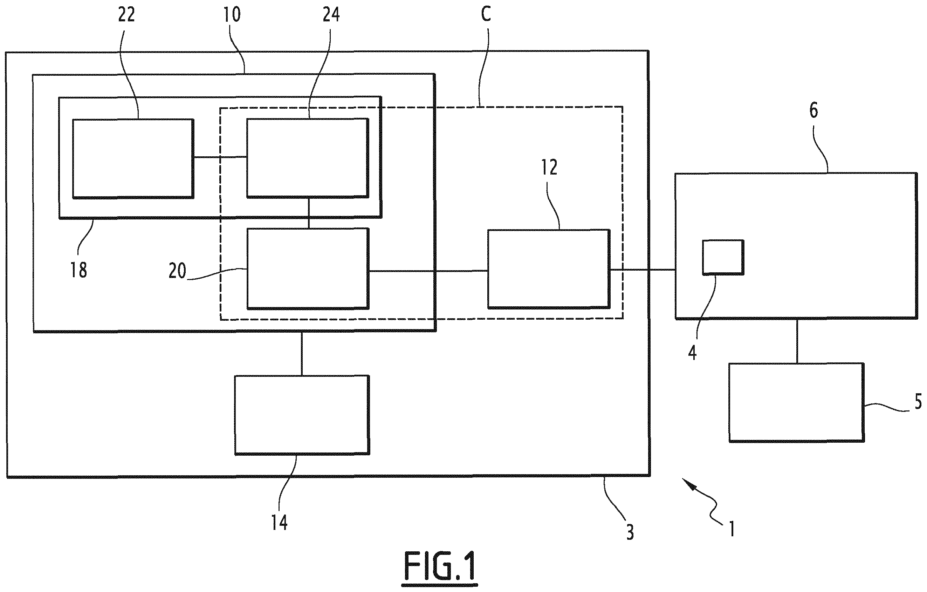

On a représenté sur la Figure 1, de manière schématique, un système 1 selon l'invention, pour la commande par un opérateur, notamment un pilote, d'un objet déplaçable 4 tel qu'un curseur sur un dispositif 6 de visualisation disposé dans le cockpit d'un aéronef.

Le dispositif de visualisation comprend par exemple plusieurs écrans dans lesquels le curseur 4 peut se déplacer, en réponse à une action de l'opérateur sur le système 1 de commande.

Le système 1 de commande comprend des moyens 3 de commande visuelle de la position du curseur 4, propres à positionner et à déplacer le curseur 4 sur une zone du dispositif 6 de visualisation visée par le regard du pilote.

Le système 1 comprend par ailleurs des moyens 5 de commande manuelle de la position du curseur 4, propres à déplacer le curseur sur le dispositif 6 de visualisation en réponse à une action manuelle de l'opérateur.

Les moyens 3 de commande visuelle comprennent un module 10 de saisie du regard, propre à déterminer, en au moins un instant donné, la position de la zone cible que vise le regard de l'opérateur sur le dispositif 6 de visualisation.

Les moyens 3 de commande visuelle comprennent également un module 12 d'interface, propre à gérer le déplacement du curseur 4 sur le dispositif 6 de visualisation en fonction de la zone cible visée par le regard de l'opérateur telle que déterminée par le module 10 de saisie.

Les moyens 3 de commande visuelle comprennent en outre une commande d'activation 14, dont l'activation par un pilote est propre à générer le positionnement par le module 12 d'interface du curseur 4 sur la zone cible du dispositif 6 de visualisation.

Le module 10 de saisie comprend des moyens 18 d'acquisition, propres à déterminer l'axe de direction du regard de l'opérateur, et une application 20 de détection de la position de la zone cible sur la base d'une zone d'intersection entre cet axe de direction du regard et un plan d'affichage du dispositif de visualisation.

De plus, le module 10 de saisie est propre à transmettre au module 12 d'interface la position de la zone cible ainsi déterminée.

Les moyens 18 d'acquisition comprennent un dispositif 22 d'acquisition de données relatives à la position et à l'orientation du regard du pilote, et une application 24 de détermination de l'axe de direction du regard de l'opérateur à partir de ces données.

L'application 24 est une application stockée sur la mémoire d'un calculateur C de l'aéronef et exécutée par un processeur de ce calculateur.

Le dispositif 22 d'acquisition comprend par exemple une caméra, avantageusement propre à capter des rayonnements à la fois dans le domaine visible et dans le domaine infrarouge, de telle sorte qu'elle est adaptée pour acquérir l'image du pilote quelles que soient les conditions de luminosité, notamment en faible luminosité.

Par exemple, le dispositif 22 est propre à acquérir des données relatives à la position et l'orientation de la tête du pilote, à partir desquelles l'application 24 détermine l'axe d'orientation de la tête du pilote, donc de son regard.

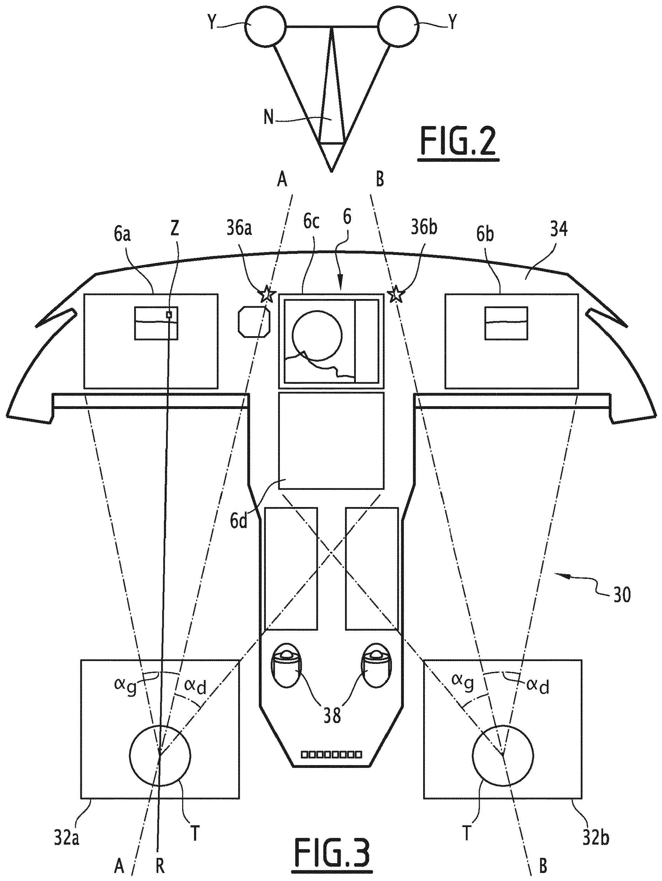

Ce mode de réalisation est avantageusement mis en oeuvre par l'acquisition par le dispositif 22 d'une image de la tête du pilote et de son environnement, l'application 24 étant propre à analyser cette image pour détecter une figure géométrique formée par des éléments du visage du pilote et pour en déduire la position et l'orientation de ce visage. On a ainsi représenté sur la Figure 2 un exemple de figure géométrique détectée par l'application 24, formée par les yeux Y et le nez N du pilote.

La détermination de la position et l'orientation de cette figure géométrique en un instant de détermination *tₙ* donné est par exemple réalisée par rapport à des mires de référence positionnées de manière fixe dans le cockpit, notamment sur le siège du pilote.

Alternativement, la détermination de la position et de l'orientation de cette figure géométrique en un instant de détermination *tₙ* donné est réalisée par comparaison avec la position et l'orientation déterminées à l'instant de détermination antérieur *tₙ₋₁*. Ainsi, l'application 24 détermine la distance entre la figure géométrique à l'instant *tₙ* et celle à l'instant *tₙ₋₁*, ainsi que l'angle de rotation dans l'espace de la figure géométrique entre ces deux instants, pour déduire de la position et l'orientation à l'instant *tₙ₋₁*, la position et l'orientation à l'instant *tₙ.*

Cet angle de rotation mesure la rotation de la figure géométrique par rapport à trois axes d'un repère orthogonal. Ceci permet de déterminer la direction du regard du pilote à la fois dans un plan horizontal et dans un plan vertical, donc de déplacer le curseur 4 dans toutes les directions sur le dispositif 6 de visualisation.

Cependant, pour éviter une dérive dans le temps des position et orientation ainsi déterminées, qui serait due à une sommation des erreurs de mesure, l'application 24 est propre à se recaler de manière périodique en déterminant, en certains des instants de détermination, la position et l'orientation de la figure géométrique par rapport aux mires de références positionnées de manière fixe dans le cockpit.

L'application 20 de détection de la position de la zone cible est également une application stockée sur la mémoire du calculateur C et exécutée par un processeur de ce calculateur.

L'application 20 est propre à déterminer la zone du dispositif 6 de visualisation visée par le regard du pilote, en calculant un point d'intersection entre l'axe de direction du regard déterminé par les moyens 18 d'acquisition et un plan d'affichage du dispositif 6 de visualisation, c'est-à-dire un plan de ce dispositif sur lequel se forment les images.

L'application 20 comprend avantageusement des moyens de filtrage, propres à filtrer les mouvements intempestifs de la tête du pilote, résultant principalement de la turbulence de la masse d'air dans laquelle évolue l'aéronef.

En effet, la position de la zone cible sur le dispositif 6 comprend une composante due à un mouvement contrôlé par le pilote et une composante de bruit, due aux mouvements de l'aéronef. L'application 20 est ainsi propre à filtrer cette composante de bruit pour conserver principalement la composante due au mouvement contrôlé par le pilote.

Ce filtrage est par exemple réalisé en déterminant, à partir de positions de la zone cible calculées en des instants antérieurs à l'instant de détermination *tₙ*, un mouvement moyen de cette zone cible, et en déduisant de ce mouvement moyen la position de la zone cible à l'instant de détermination *tₙ.* Ce filtrage est d'autant plus efficace que le nombre d'instants antérieurs pris en compte est grand.

Le module 12 d'interface est propre à recevoir du module 10 la position de la zone cible visée par le pilote à un instant de détermination *tₙ*, et à générer le positionnement du curseur 4 sur le dispositif 6 de visualisation, sur cette zone cible. Ces fonctions sont également mises en oeuvre par le calculateur C.

Avantageusement, le curseur 4 n'est positionné sur la zone cible que lorsque la commande d'activation 14 est actionnée.

La commande d'activation 14 comprend par exemple un bouton dont l'actionnement à un instant donné provoque la génération par cette commande 14 d'un signal d'activation à destination du module 10 de détermination de la position de la zone cible.

La commande d'activation 14 est actionnable entre une position relâchée et une position d'activation.

Avantageusement, la position relâchée est la position stable par défaut de la commande d'activation 14, c'est-à-dire la position de cette commande lorsque aucun effort n'est exercé par le pilote sur cette commande, tandis que la position d'activation n'est actionnée que lorsque le pilote exerce une action sur la commande d'activation 14. Par ailleurs, le signal d'activation est généré à destination du module 10 uniquement lorsque la commande d'activation 14 est dans sa position d'activation, c'est-à-dire uniquement lorsque un pilote exerce une action sur cette commande. Le signal d'activation est donc uniquement généré sur l'intervalle de temps compris entre l'actionnement et le relâchement par le pilote de la commande d'activation 14.

Le module 10 est propre à recevoir ce signal d'activation, et à déterminer la position de la zone cible visée par le pilote à chaque instant auquel la commande d'activation 14 est actionnée. Ainsi, le module 10 transmet au module 12 d'interface la position de la zone cible déterminée à chacun de ces instants.

La Figure 3 illustre un mode de réalisation du système 1 de commande selon l'invention, disposé dans un cockpit 30 d'un aéronef.

Le cockpit 30 comprend deux sièges 32a, 32b de pilotes, et une planche de bord 34 incluant le dispositif 6 de visualisation du système 1.

Ce dispositif 6 comprend deux écrans latéraux 6a, 6b, chacun disposé en face d'un siège 32a, 32b et dédié au pilote assis dans ce siège, et deux écrans centraux 6c, 6d, disposés au centre de la planche de bord 34, et dédiés aux deux pilotes.

Chacun des pilotes peut ainsi contrôler le mouvement d'un curseur 4 et effectuer des actions dans trois des écrans du dispositif 6 de visualisation.

Chaque curseur 4 n'est pas affiché s'il est inactif, par exemple si aucune action n'a été réalisée sur les moyens de commande visuelle 3 ou manuelle 5 pendant une durée déterminée.

Ainsi les écrans 6a et 6b sont généralement des écrans de vol principaux (ou « Primary Flight Display ») affichant des paramètres de vol de l'aéronef. Les écrans 6c et 6d sont des écrans multisystèmes (ou « Multisystem Display Unit ») prévus notamment pour réaliser la gestion du vol, la gestion des systèmes avion, des checklist électroniques, etc. Ces écrans sont destinés à afficher des paramètres de fonctionnement ou de navigation de l'aéronef.

Chacun des écrans 6a, 6b, 6c et 6d est propre à afficher des informations relatives au vol de l'aéronef et aux systèmes de l'aéronef, et permettent aux pilotes d'interagir avec ces systèmes.

Dans ce mode de réalisation, le dispositif 22 d'acquisition du système 1 comprend deux caméras 36a, 36b fixées à la planche de bord, chacune destinée à acquérir des données relatives à la position et à l'orientation du regard d'un des deux pilotes.

Chaque caméra 36a est avantageusement placée de telle sorte que par rapport à un axe A-A (respectivement B-B) entre la position moyenne de la tête T du pilote du siège 32a (respectivement 32b) et la caméra 36a (respectivement 36b), les chemins angulaires gauche α_{g} et droit α_{d} du regard du pilote soient sensiblement identiques. Ces chemins angulaires correspondent aux angles que doit faire l'axe du regard du pilote par rapport à l'axe A ou B pour lui permettre de visualiser les trois écrans qui lui sont dédiés. Une telle disposition des caméras permet notamment d'équilibrer les erreurs de mesure de part et d'autre de l'axe A ou B.

La position moyenne de la tête du pilote est par exemple déterminée par une position que le pilote serait susceptible d'occuper sur le siège.

On a par ailleurs représenté sur la Figure 3 un exemple d'axe de direction R du regard d'un pilote et la zone Z correspondante du dispositif 6 de visualisation visée par le pilote. Cette zone Z est située à l'intersection entre l'axe R et le plan d'affichage du dispositif 6, qui est dans l'exemple représenté le plan d'affichage de l'écran 6a.

Les moyens 5 de commande manuelle comprennent deux dispositifs 38 de commande de curseur, de type « CCD », chacun dédié à un pilote.

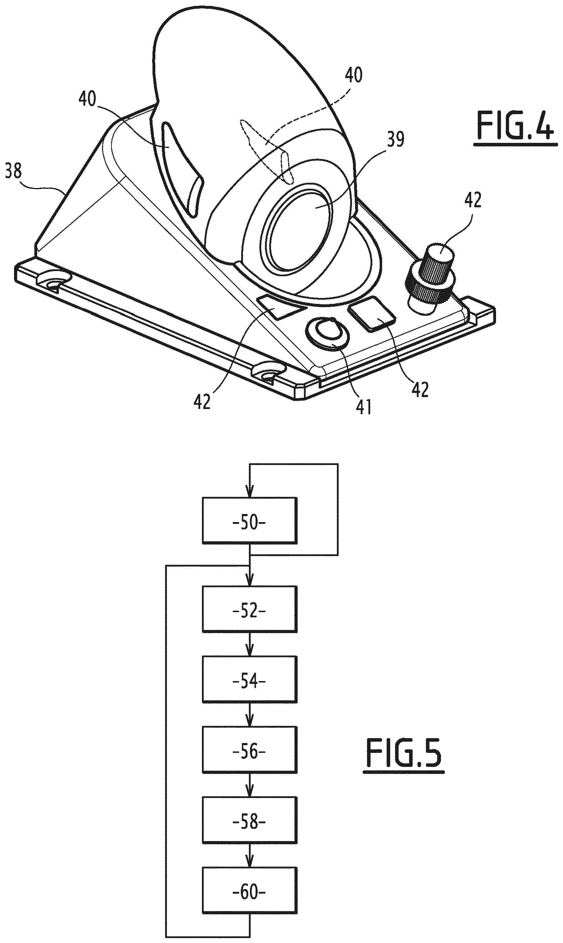

Comme représenté sur la Figure 4, chaque dispositif 38 comprend une boule 39 de commande ou « trackball », dont la rotation est propre à générer un déplacement du curseur 4 sur chacun des trois écrans dédiés au pilote considéré, et entre ces trois écrans. Le dispositif 38 comprend par ailleurs deux boutons 40 de commande, disposés de part et d'autre de la boule 39 de commande, et une manette d'affectation 41 permettant de positionner le curseur 4 dans un des trois écrans dédiés au pilote. Lorsque cette manette d'affectation 41 est actionnée, le curseur 4 est positionné à une position par défaut dans l'écran choisi.

Le dispositif 38 comprend par ailleurs d'autres commandes 42, permettant par exemple la sélection d'objets dans un écran ou l'apparition d'un menu.

La commande d'activation 14 est avantageusement intégrée à chaque dispositif 38. Par exemple, cette commande d'activation 14 est actionnée lorsqu'un pilote actionne simultanément les deux boutons 40 de commande.

En variante, un bouton supplémentaire, dédié à la commande d'activation 14, est prévu sur le dispositif 38.

En référence à la Figure 5, la mise en oeuvre d'un procédé selon un mode de réalisation de l'invention pour le déplacement par le système 1 de commande, sous le contrôle d'un pilote, du curseur 4 sur le dispositif 6 de visualisation, va maintenant être décrite.

Dans un état initial 50, la commande d'activation 14 est relâchée. Ainsi, un pilote ne peut déplacer le curseur 4 que par l'intermédiaire des moyens 5 de commande manuelle, c'est-à-dire le dispositif 36 de commande.

A partir de cet état, dans une étape 52, le dispositif 22 d'acquisition capte et enregistre de manière continue des données relatives à la position et à l'orientation du regard du pilote.

Lorsque le pilote souhaite déplacer le curseur rapidement d'une zone du dispositif 6 à une autre, ou lorsqu'il souhaite faire apparaître le curseur 4, si celui-ci n'est pas affiché, le pilote actionne les moyens 3 de commande visuelle.

Pour cela, le pilote oriente son regard vers la zone du dispositif 6 sur laquelle il souhaite que soit positionné le curseur, et actionne la commande d'activation 14.

En réponse à cet actionnement la commande d'activation 14 génère dans une étape 54 un signal d'activation à destination du module 10 de saisie.

Dans une étape 56, le module 10 reçoit ce signal d'activation, et l'application 24 détermine l'axe A de direction du regard du pilote à partir des données relatives à la position et à l'orientation du regard du pilote enregistrées par le dispositif 22 d'acquisition à l'instant *tₙ* auquel la commande d'activation 14 a été actionnée.

Puis, dans une étape 58, l'application 20 détermine la zone du dispositif 6 de visualisation visée par le regard du pilote, en calculant un point d'intersection entre l'axe de direction du regard déterminé lors de l'étape 56 et le plan d'affichage du dispositif 6 de visualisation.

Lors de cette étape 58, avantageusement, l'application 20 filtre les mouvements intempestifs de la tête du pilote. Comme précédemment décrit, ce filtrage est réalisé par exemple en déterminant, à partir des positions de la zone cible calculées sur un intervalle de temps ΔT antérieur à l'instant de détermination *tₙ*, un mouvement moyen de cette zone cible, et en déduisant de ce mouvement moyen la position de la zone cible à l'instant de détermination *tₙ.* Les positions de la zone cible en des instants antérieurs sont déterminées à partir des données enregistrées par le dispositif 22 d'acquisition lors de l'étape 52. L'intervalle de temps ΔT dépend de la fréquence des mouvements intempestifs de la tête du pilote liés principalement à la fréquence de la turbulence ressentie au niveau du siège pilote.

Dans une étape 60, l'application 20 transmet au module 12 d'interface la position de la zone cible visée par le pilote, et le module 12 génère le positionnement du curseur 4 sur cette zone cible du dispositif 6 de visualisation.

Les étapes 56 à 60 sont réalisées tant que le pilote actionne la commande d'activation 14. Le curseur 4 est donc déplacé par le module 12 uniquement sur l'intervalle de temps compris entre l'actionnement et le relâchement par le pilote de la commande d'activation 14.

Le pilote peut par la suite commander le curseur 4 à nouveau par l'intermédiaire des moyens 3 de commande visuelle, selon les étapes 52 à 60 décrites ci-dessus, ou par l'intermédiaire des moyens 5 de commande manuelle s'il souhaite un réglage plus précis de la position du curseur 4.

Si le pilote n'effectue aucune action sur les moyens de commande visuelle 3 ou manuelle 5, le curseur 4 disparaît du dispositif 6 après un délai prédéterminé, par exemple 30 secondes.

Le système et le procédé selon l'invention permettent ainsi au pilote de déplacer le curseur 4 sur la zone d'intérêt qu'il vise de manière quasi-instantanée. De plus, l'utilisation de ce système par le pilote est intuitive et ne lui demande que peut d'attention. En effet, le regard du pilote se dirige naturellement vers la zone qui l'intéresse et où il souhaite placer le curseur.

En outre, ce système peut être utilisé quel que soit le nombre d'écrans du dispositif 6 de visualisation. En particulier, si le dispositif 6 comporte un unique écran, le système et le procédé selon l'invention permettent au pilote de placer le curseur à une zone précise de cet écran de manière quasi-instantanée, ce qui ne peut être fait opérationnellement avec les seuls moyens de commande manuelle.

Par ailleurs, le système selon l'invention peut être utilisé quelles que soient les conditions de vol de l'aéronef. En particulier, l'utilisation de caméra infrarouge permet son utilisation quelles que soient les conditions de luminosité, tandis que la mise en œuvre du filtrage par l'application 20 permet son utilisation malgré les turbulences subies par l'aéronef.

Il devra être compris que les exemples de réalisation présentés ci-dessus ne sont pas limitatifs.

Notamment, selon une variante, le dispositif 22 d'acquisition est propre à acquérir des données relatives à la position et l'orientation des yeux du pilote, à partir desquelles l'application 24 détermine l'axe d'orientation du regard du pilote.

Selon une autre variante, le dispositif 22 d'acquisition est propre à acquérir des données relatives à la position et l'orientation à la fois de la tête et des yeux du pilote, l'application 24 déterminant l'axe d'orientation du regard du pilote à partir de ces deux types d'informations.

Par ailleurs, selon un autre mode de réalisation de l'invention, le signal d'activation est généré à destination du module 10 dès que le pilote exerce un effort sur la commande d'activation 14, et pendant un intervalle de temps prédéfini Δt après relâchement de cet effort par le pilote.

Ainsi, l'actionnement de la commande 14 de manière ponctuelle à un instant *tᵢ* initial provoque le positionnement du curseur 4 sur la zone cible et le déplacement du curseur 4 sur le dispositif 6 de visualisation pendant la durée Δt après l'instant *tᵢ.*

Selon un autre mode de réalisation de l'invention, le signal d'activation est généré à destination du module 10 dès que le pilote actionne la commande d'activation 14, et jusqu'à ce qu'il actionne à nouveau la commande d'activation 14.

Ce mode de réalisation est par exemple mis en œuvre au moyen d'une commande d'activation comprenant un bouton à retour élastique, dont un premier actionnement entraîne la génération d'un signal d'activation à destination du module 10, et dont un deuxième actionnement entraîne l'arrêt de la génération de ce signal d'activation.

Dans ce mode de réalisation, l'actionnement de la commande 14 à un instant *tᵢ* initial provoque ainsi le positionnement du curseur 4 sur la zone cible et le déplacement du curseur 4 sur le dispositif 6 de visualisation conformément aux zones cibles visées par le pilote, jusqu'à ce que la commande 14 soit à nouveau actionnée par le pilote pour retrouver sa position relâchée.

Ainsi, le module 12 génère, à chaque instant de détermination *tₙ* postérieur à l'instant initial *tᵢ*, le positionnement du curseur 4 sur la zone cible visée à cet instant *tₙ.* Le curseur 4 se déplace donc de manière sensiblement continue sur le dispositif 6 de visualisation.

En variante, les positions relâchée et d'activation de la commande d'activation sont deux positions stables, c'est-à-dire que la commande est propre à rester dans la position actionnée lorsque qu'un pilote exerce un effort sur ce bouton à partir de la position relâchée, et à reprendre sa position relâchée uniquement en réponse à un nouvel effort exercé par le pilote.

Lorsque la commande 14 n'est pas activée, la position du curseur sur le dispositif 6 peut être commandée par l'intermédiaire des moyens 5 de commande manuelle.

Alternativement, les moyens 5 de commande manuelle peuvent être supprimés, et le curseur commandé par les seuls moyens 3 de commande visuelle.

En outre, le dispositif 22 d'acquisition peut comprendre des moyens de détection de données relatives à la position et à l'orientation du regard du pilote autres qu'une caméra, par exemple un dispositif optique à base de faisceaux lumineux interceptés ou non en fonction de la position de la tête du pilote.

Par ailleurs, la commande d'activation 14 peut être placée à un autre endroit que sur le dispositif de commande de curseur CCD, notamment tout endroit accessible par le pilote.

Les caractéristiques techniques des modes de réalisation et variantes mentionnées ci-dessus peuvent être combinées entre elles.

## Revendications

1. Système (1) de commande d'une position d'un objet déplaçable (4) sur un dispositif de visualisation (6) convenant à un poste de pilotage (30) d'un aéronef, ledit système (1) étant actionnable par un opérateur et étant **caractérisé en ce qu'**il comprend :
- des moyens (10) de détermination, en au moins un instant donné, d'une position d'une zone cible (Z) sur ledit dispositif de visualisation vers laquelle se dirige le regard dudit opérateur,
- des moyens (12) de positionnement propres à placer ledit objet (4) sur ladite zone cible (Z) dudit dispositif de visualisation (6),
ledit système (1) comprenant en outre :
- un dispositif (38) de commande manuelle de la position dudit objet,
- une commande d'activation (14), propre à commander un affichage par lesdits moyens (12) de positionnement dudit objet sur ladite zone cible (Z) du dispositif de visualisation (6), en réponse à un actionnement dudit opérateur, ladite commande d'activation (14) étant choisie parmi :
- une commande d'activation (14) propre à commander ledit affichage sur un intervalle de temps compris entre l'actionnement et le relâchement par ledit opérateur de ladite commande d'activation (14),
- une commande d'activation propre à commander ledit affichage pendant un intervalle de temps compris entre un premier et un deuxième actionnement par ledit opérateur de ladite commande d'activation (14),
- une commande d'activation propre à commander ledit affichage pendant un intervalle de temps prédéfini (Δt) après un actionnement ponctuel par ledit opérateur de ladite commande d'activation (14).

2. Système (1) selon la revendication 1, **caractérisé en ce que** lesdits moyens (10) de détermination de la position de ladite zone cible (Z) comprennent :
- des moyens (18) d'acquisition d'un axe de direction (R) du regard dudit opérateur,
- des moyens (20) de détection de la position de ladite zone cible (Z) sur la base d'une zone d'intersection entre ledit axe de direction (R) du regard et un plan d'affichage dudit dispositif (6) de visualisation.

3. Système (1) selon la revendication 2, **caractérisé en ce que** lesdits moyens (18) d'acquisition sont propres à déterminer une position et une orientation de la tête (T) de l'opérateur, et à déterminer ledit axe de direction (R) en fonction de la position et de l'orientation de la tête (T) de l'opérateur.

4. Système (1) selon l'une quelconque des revendications 2 ou 3, **caractérisé en ce que** lesdits moyens (18) d'acquisition sont propres à déterminer une position et une orientation des yeux (Y) de l'opérateur, et à déterminer ledit axe de direction (R) en fonction de la position et de l'orientation des yeux (Y) de l'opérateur.

5. Système (1) selon l'une quelconque des revendications 2 à 4, **caractérisé en ce que** lesdits moyens (18) d'acquisition comprennent au moins une caméra (36a, 36b).

6. Système (1) selon la revendication 5, **caractérisée en ce que** la ou chaque caméra (36a, 36b) est positionnée dans ledit poste de pilotage (30) de telle sorte que les chemins angulaires gauche (α_{g}) et droit (α_{d}) du regard dudit pilote par rapport à un axe (A-A, B-B) reliant une position moyenne déterminée de la tête dudit pilote et ladite caméra (36a, 36b), pour balayer ledit dispositif de visualisation (6), soient sensiblement identiques.

7. Système (1) selon l'une quelconque des revendications 5 ou 6, **caractérisé en ce que** lesdits moyens (18) d'acquisition comprennent au moins une caméra (36a, 36b) propre à capter des rayonnements infrarouge.

8. Système (1) selon l'une quelconque des revendications précédentes, **caractérisé en ce qu'**il comprend en outre des moyens de filtrage de mouvements indésirables de l'opérateur, notamment de mouvements dus à des effets de turbulence subis par ledit aéronef.

9. Système (1) selon l'une quelconque des revendications 1 à 8, **caractérisé en ce que** ladite commande d'activation (14) est positionnée sur ledit dispositif (38) de commande manuelle.

10. Système (1) selon l'une des revendications précédentes, **caractérisé en ce qu'**il est adapté pour qu'un réglage de la position de l'objet placé par lesdits moyens (12) de positionnement soit effectué par l'intermédiaire dudit dispositif (38) de commande manuelle.

11. Système (1) selon l'une quelconque des revendications précédentes, **caractérisé en ce que** lesdits moyens (10) de détermination sont propres à déterminer une pluralité de positions successives d'une zone cible (Z), et **en ce que** lesdits moyens (12) de positionnement sont propres à déplacer ledit objet (4) successivement vers des positions de ladite pluralité de positions.

12. Système (1) selon l'une quelconque des revendications précédentes, **caractérisé en ce que** ledit dispositif (6) de visualisation comprend une pluralité d'écrans (6a, 6b, 6c, 6d), lesdits moyens (10) de détermination étant propres à déterminer sur quel écran dudit dispositif (6) de visualisation ladite zone cible (Z) est située.

13. Système (1) selon l'une quelconque des revendications précédentes, **caractérisé en ce que** ledit objet (4) est un curseur sur un écran d'affichage (6a, 6b, 6c, 6d).

14. Procédé de commande d'une position d'un objet déplaçable sur un dispositif de visualisation (6) convenant à un poste de pilotage (30) d'un aéronef, au moyen d'un système de commande selon l'une quelconque des revendications 1 à 13, **caractérisé en ce qu'**il comprend :
- la détermination (50, 52, 56, 58) en au moins un instant donné, d'une position d'une zone cible (Z) sur ledit dispositif de visualisation vers laquelle se dirige le regard d'un opérateur,
- un premier positionnement (60) dudit objet (4) sur ladite zone cible (Z) dudit dispositif de visualisation (6),
le procédé comprenant en outre :
- un deuxième positionnement dudit objet (4) par un dispositif (38) de commande manuelle de la position dudit objet.

15. Procédé de commande selon la revendication 14, selon lequel le deuxième positionnement dudit objet (4) par le dispositif (38) de commande manuelle de la position dudit objet est un réglage du premier positionnement (60) dudit objet (4) sur ladite zone cible (Z) dudit dispositif de visualisation (6).

16. Procédé de commande selon l'une des revendications 14 ou 15, **caractérisé en ce que** la détermination (50, 52, 54, 56, 58) de la position de ladite zone cible (Z) comprend :
- l'acquisition (50, 52, 56) d'un axe de direction (R) du regard dudit opérateur,
- la détection (58) de la position de ladite zone cible (Z) sur la base d'une zone d'intersection entre ledit axe de direction (R) du regard et un plan d'affichage dudit dispositif (6) de visualisation.

## Patentansprüche

1. System (1) zum Steuern einer Position eines bewegbaren Objektes (4) auf einer Anzeigevorrichtung (6), die zu einem Cockpit (30) eines Flugzeuges gehört, wobei das System (1) von einer Bedienperson betätigbar ist und gekennzeichnet ist, dass es umfasst:
- Mittel (10) zum Bestimmen zu mindestens einem gegebenen Zeitpunkt einer Position einer Zielzone (Z) auf der Anzeigevorrichtung, zu der sich der Blick der Bedienperson richtet,
- Mittel (12) zum Positionieren, die geeignet sind, das Objekt (4) auf der Zielzone (Z) der Anzeigevorrichtung (6) zu platzieren,
wobei das System (1) außerdem umfasst:
- eine Vorrichtung (38) zur manuellen Steuerung der Position des Objektes,
- eine Aktivierungssteuerung (14), die geeignet ist, eine Anzeige durch die Mittel (12) zum Positionieren des Objektes auf der Zielzone (Z) der Anzeigevorrichtung (6) abhängig von einer Betätigung der Bedienperson zu steuern, wobei die Aktivierungssteuerung (14) ausgewählt ist aus:
- einer Aktivierungssteuerung (14), die geeignet ist, die Anzeige über einen Zeitraum zwischen der Betätigung und dem Loslassen der Aktivierungssteuerung (14) durch die Bedienperson zu steuern,
- einer Aktivierungssteuerung, die geeignet ist, die Anzeige während eines Zeitraums zwischen einer ersten und einer zweiten Betätigung der Aktivierungssteuerung (14) durch die Bedienperson zu steuern,
- einer Aktivierungssteuerung, die geeignet ist, die Anzeige während eines vorbestimmten Zeitraums (Δt) nach einer einmaligen Betätigung der Aktivierungssteuerung (14) durch die Bedienperson zu steuern.

2. System (1) nach Anspruch 1, **dadurch gekennzeichnet, dass** die Mittel (10) zum Bestimmen der Position der Zielzone (Z) umfassen:
- Mittel (18) zum Beschaffen einer Richtungsachse (R) des Blickes der Bedienperson,
- Mittel (20) zum Erfassen der Position der Zielzone (Z) auf der Basis einer Schnittzone zwischen der Richtungsachse (R) des Blickes und einer Anzeigeebene der Anzeigevorrichtung (6).

3. System (1) nach Anspruch 2, **dadurch gekennzeichnet, dass** die Mittel (18) zum Beschaffen geeignet sind, eine Position und eine Orientierung des Kopfes (T) der Bedienperson zu bestimmen und die Richtungsachse (R) abhängig von der Position und der Orientierung des Kopfes (T) der Bedienperson zu bestimmen.

4. System (1) nach einem beliebigen der Ansprüche 2 oder 3, **dadurch gekennzeichnet, dass** die Mittel (18) zum Beschaffen geeignet sind, eine Position und eine Orientierung der Augen (Y) der Bedienperson zu bestimmen und die Richtungsachse (R) abhängig von der Position und der Orientierung der Augen (Y) der Bedienperson zu bestimmen.

5. System (1) nach einem beliebigen der Ansprüche 2 bis 4, **dadurch gekennzeichnet, dass** die Mittel (18) zum Beschaffen mindestens eine Kamera (36a, 36b) umfassen.

6. System (1) nach Anspruch 5, **dadurch gekennzeichnet, dass** die oder jede Kamera (36a, 36b) in dem Cockpit (30) derart positioniert ist, dass der linke (α_{g}) und rechte (α_{d}) Winkelweg des Blickes des Piloten in Bezug auf eine Achse (A-A, B-B), die eine bestimmte mittlere Position des Kopfes des Piloten und die Kamera (36a, 36b) verbindet, um die Anzeigevorrichtung (6) abzutasten, im Wesentlichen identisch sind.

7. System (1) nach einem beliebigen der Ansprüche 5 oder 6, **dadurch gekennzeichnet, dass** die Mittel (18) zum Beschaffen mindestens eine Kamera (36a, 36b) umfassen, die geeignet ist, eine Infrarotstrahlung aufzunehmen.

8. System (1) nach einem beliebigen der vorhergehenden Ansprüche, **dadurch gekennzeichnet, dass** es außerdem Mittel zum Filtern von unerwünschten Bewegungen der Bedienperson, insbesondere Bewegungen, die durch Turbulenzauswirkungen begründet sind, denen das Flugzeug ausgesetzt ist, umfasst.

9. System (1) nach einem beliebigen der Ansprüche 1 bis 8, **dadurch gekennzeichnet, dass** die Aktivierungssteuerung (14) an der Vorrichtung (38) zur manuellen Steuerung positioniert ist.

10. System (1) nach einem der vorhergehenden Ansprüche, **dadurch gekennzeichnet, dass** es derart angepasst ist, dass eine Einstellung der Position des von den Mitteln (12) zum Positionieren platzierten Objektes mittels der Vorrichtung (38) zur manuellen Steuerung durchgeführt wird.

11. System (1) nach einem beliebigen der vorhergehenden Ansprüche, **dadurch gekennzeichnet, dass** die Mittel (10) zum Bestimmen geeignet sind, eine Mehrzahl von aufeinanderfolgenden Positionen einer Zielzone (Z) zu bestimmen und dass die Mittel (12) zum Positionieren geeignet sind, das Objekt (4) aufeinanderfolgend zu den Positionen der Mehrzahl von Positionen zu bewegen.

12. System (1) nach einem beliebigen der vorhergehenden Ansprüche, **dadurch gekennzeichnet, dass** die Anzeigevorrichtung (6) eine Mehrzahl von Bildschirmen (6a, 6b, 6c, 6d) umfasst, wobei die Mittel (10) zum Bestimmen geeignet sind zu bestimmen, auf welchem Bildschirm der Anzeigevorrichtung (6) die Zielzone (Z) liegt.

13. System (1) nach einem beliebigen der vorhergehenden Ansprüche, **dadurch gekennzeichnet, dass** das Objekt (4) ein Cursor auf einem Anzeigebildschirm (6a, 6b, 6c, 6d) ist.

14. Verfahren zum Steuern einer Position eines bewegbaren Objektes auf einer Anzeigevorrichtung (6), die zu einem Cockpit (30) eines Flugzeuges gehört, mittels eines Systems (1) nach einem beliebigen der Ansprüche 1 bis 13, **dadurch gekennzeichnet, dass** es umfasst:
- Bestimmen (51, 52, 56, 58) zu mindestens einem gegebenen Zeitpunkt einer Position einer Zielzone (Z) auf der Anzeigevorrichtung, zu der sich der Blick der Bedienperson richtet,
- ein erstes Positionieren (60) des Objektes (4) auf der Zielzone (Z) der Anzeigevorrichtung (6),
wobei das Verfahren außerdem umfasst:
- ein zweites Positionieren des Objektes (4) durch eine Vorrichtung (38) zur manuellen Steuerung der Position des Objektes.

15. Steuerverfahren nach Anspruch 14, nach dem das zweite Positionieren des Objektes (4) durch die Vorrichtung (38) zur manuellen Steuerung der Position des Objektes ein Einstellen der ersten Positionierung (60) des Objektes (4) auf der Zielzone (Z) der Anzeigevorrichtung (6) ist.

16. Steuerverfahren nach einem der Ansprüche 14 oder 15, **dadurch gekennzeichnet, dass** das Bestimmen (51, 52, 54, 56, 58) der Position der Zielzone (Z) umfasst:
- Beschaffen (51, 52, 56) einer Richtungsachse (R) des Blickes der Bedienperson,
- Erfassen (58) der Position der Zielzone (Z) auf der Basis einer Schnittzone zwischen der Richtungsachse (R) des Blickes und einer Anzeigeebene der Anzeigevorrichtung (6).

## Claims

1. A system (1) for controlling a position of a movable object (4) on a viewing device (6) suitable for an aircraft cockpit (30), said system (1) being actuatable by an operator and being **characterized in that** it comprises:
- means (10) for determining, at least at one given moment, a position of a target zone (Z) on said viewing device toward which the operator's gaze is directed,
- positioning means (12) adapted for placing the object (4) on the target zone (Z) of the viewing device (6),
said system (1) further comprising:
- a manual control device (38) for controlling the position of the object,
- an activation command (14), adapted for commanding a display by the positioning means (12) of said object on the target zone (Z) of the viewing device (6), in response to an actuation by the operator, said activation command (14) being chosen from among:
- an activation command (14) adapted for commanding said display over a time interval comprised between the actuation and the release by said operator of said activation command (14),
- an activation command adapted for commanding said display during a time interval comprised between a first and second actuation by said operator of said activation command (14),
- an activation command adapted for commanding said display during a predefined time interval (Δt) after point actuation of said activation (14) command by the operator.

2. The system (1) according to claim 1, **characterized in that** said means (10) for determining the position of the target zone (Z) comprise:
- means (18) for acquiring a directional axis (R) of direction of the operator's gaze,
- means (20) for detecting the position of said target zone (Z) based on a zone of intersection between said axis (R) of direction of the gaze and a display plane of said viewing device (6).

3. The system (1) according to claim 2, **characterized in that** said acquisition means (18) are adapted for determining a position and orientation of the operator's head (T), and determining said directional axis (R) based on the position and orientation of the operator's head (T).

4. The system (1) according to any one of claims 2 or 3, **characterized in that** said acquisition means (18) are adapted for determining a position and orientation of the operator's eyes (Y), and determining said directional axis (R) as a function of the position and orientation of the operator's eyes (Y).

5. The system (1) according to any one of claims 2 to 4, **characterized in that** said acquisition means (18) comprise at least one camera (36a, 36b).

6. The system (1) according to claim 5, **characterized in that** the or each camera (36a, 36b) is positioned in said cockpit (30) such that the left (α_{g}) and right (α_{d}) angular paths of the pilot's gaze with respect to an axis (A-A, B-B) linking a predetermined mean position of the pilot's head and the camera (36a, 36b), to scan said viewing device (6), are substantially identical.

7. The system (1) according to any one of claims 5 or 6, **characterized in that** the acquisition means (18) comprise at least one camera (36a, 36b) adapted for capturing infrared rays.

8. The system (1) according to any one of the preceding claims, **characterized in that** it further comprises means for filtering unwanted movements of the operator, in particular movements due to turbulence effects experienced by the aircraft.

9. The system (1) according to any one of claims 1 to 8, **characterized in that** said activation command (14) is positioned on said manual control device (38).

10. The system according to one of the preceding claims, **characterized in that** it is suitable for an adjustment to the position of the object placed by the positioning means (12) to be done using the manual control device (38).

11. The system (1) according to any one of the preceding claims, **characterized in that** the determination means (10) are adapted for determining a plurality of successive positions of the target zone (Z), and **in that** the positioning means (12) are adapted for moving the object (4) successively toward positions of the plurality of positions.

12. The system (1) according to any one of the preceding claims, **characterized in that** the viewing device (6) comprises a plurality of displays (6a, 6b, 6c, 6d), the determination means (10) being adapted for determining on which display (6) of said viewing device the target zone (Z) is located.

13. The system (1) according to any one of the preceding claims, **characterized in that** the object (4) is a cursor on a display screen (6a, 6b, 6c, 6d).

14. A method for controlling a position of a movable object on a viewing device (6) suitable for an aircraft cockpit (30), by means of a system (1) according to any one of claims 1 to 13, **characterized in that** it comprises:
- determining (50, 52, 56, 58), at least at one given moment, a position of a target zone (Z) on said viewing device toward which an operator's gaze is directed,
- a first positioning (60) of said object (4) on said target zone (Z) of the viewing device (6),
the method further comprising:
- a second positioning of the object (4) using a manual control device (38) for controlling the position of said object.

15. The control method according to claim 14, wherein the second positioning of the object (4) by the manual control device (38) for controlling the position of the object is an adjustment of the first positioning (60) of the object (4) on the target zone (Z) of the viewing device (6).

16. The control method according to one of claims 14 or 15, **characterized in that** the determination (50, 52, 54, 56, 58) of the position of said target zone (Z) comprises:
- acquiring (50, 52, 56) an axis (R) of direction of the operator's gaze,
- detecting (58) the position of said target zone (Z) based on an intersection zone between said directional axis (R) of the gaze and a display plane of said viewing device (6).
